# EUROPÄISCHE PATENTSCHRIFT

(11) **EP 0 662 165 B1**
(45) Veröffentlichungstag und Bekanntmachung des Hinweises auf die Patenterteilung: **15.05.1996**
(21) Anmeldenummer: 92918863.9
(22) Anmeldetag: 12.09.1992
(51) Int. Cl.: C25D 13/14, C25D 13/10, C09D 5/44

(54) **VERFAHREN ZUR ELEKTROPHORETISCHEN INNENBESCHICHTUNG VON METALLBEHÄLTERN ZUR AUFBEWAHRUNG VON LEBENSMITTELN UND GETRÄNKEN**
ELECTROPHORETIC PROCESS FOR COATING THE INTERIOR OF METAL CONTAINERS INTENDED TO HOLD FOOD AND DRINK
PROCEDE POUR LE REVETEMENT INTERIEUR ELECTROPHORETIQUE DE RECIPIENTS METALLIQUES SERVANT A LA CONSERVATION D'ALIMENTS ET DE BOISSONS

(30) Priorität: 26.09.1991 DE 4132083
(43) Veröffentlichungstag der Anmeldung: 12.07.1995
(73) Patentinhaber: BASF Lacke + Farben AG, D-48165 Münster-Hiltrup (DE)
(72) Erfinder: MARKFORT, Klaus, D-49545 Tecklenburg (DE); STENGER, Michael, Dr., D-48161 Münster (DE); JOUCK, Walter, Dr., D-48167 Münster (DE); HARRIS, Paul, Dr., West Bloomfield, MI-48324 (US)
(74) Vertreter: Münch, Volker, Dr.
(86) Internationale Anmeldenummer: EP9202099
(87) Internationale Veröffentlichungsnummer: WO9306263

(56) Entgegenhaltungen:
- WO-A-88/01287
- Patent Abstracts of Japan, Band 10, Nr 339, C385, Zusammenfassung von JP 61- 143595, publ 1986-07-01, (Honny Chem Ind Co Ltd)
- Dialog Information Services, File 351, World Patent Index 81-92, Dialog accession no. 008224218, WPI accession no. 90-111219/15, Nippon Petrochem KK: "Anodic electrodepositable coating compsn. which cures at low temp. - comprises modified resin, metal(s) of organic or inorganic cpd(s). and wax", JP-2060973, A, 900301, 9015 (Basic)

## Beschreibung

Die vorliegende Erfindung betrifft ein Verfahren zur elektrophoretischen Innenbeschichtung von Metallbehältern zur Aufbewahrung von Lebensmitteln und Getränken unter Verwendung einer wäßrigen Beschichtungszusammensetzung.

Die Applikation von Doseninnenschutzlacken mittels der elektrophoretischen Abscheidung ist bekannt. An die Doseninnenlacke werden dabei besondere Anforderungen gestellt, da sie eine besonders hohe Hydrolyse- und Chemikalienbeständigkeit aufweisen müssen. Die Beschichtungen müssen beispielsweise bei Lagerung in Kontakt mit überwiegend sauren Füllgütern beständig sein. Dabei ist grundsätzlich die anodische Elektrotauchlackierung vorteilhafter als die kathodische Variante, da die kathodisch abgeschiedenen Filme zumeist Aminogruppen enthalten und somit bei Kontakt mit sauren Füllgütern weniger beständig sein können. Doseninnenschutzlacke müssen auch strengen lebensmittelrechtlichen Vorschriften genügen, die Lacke dürfen keine Hydrolysereaktionen unter Pasteurisationsbedingen und längerdauernder Lagerung aufweisen.

Die elektrophoretische Applikation von Doseninnenschutzlacken ist vorteilhaft, da gegenüber der Spritzapplikation eine wesentlich bessere Lackausbeute und eine weiter verringerte Emission von Lösungsmitteln erreicht werden können. Außerdem ist mittels der elektrophoretischen Abscheidung die Beschichtung unterschiedlichster Dosengeometrien möglich durch den Effekt des Umgriffs bei der elektrophoretischen Abscheidung. Im Vergleich zur Spritzapplikation können eine gleichmäßige Schichtstärke und eine gute Kantenabdeckung erzielt werden. Darüber hinaus bietet das Elektrotauchlackier-Verfahren die besten Voraussetzungen für eine Prozeß-Automatisierung.

Elektrophoretisch abscheidbare Beschichtungmittel zur Innenbeschichtung von Metallbehältern, die zur Aufbewahrung von Lebensmitteln und Getränken geeignet sind (sog. "Food contacting Coatings"), sind in großer Zahl bekannt.

Dabei handelt es sich vielfach um Bindemittel auf Hydroxyesterbasis, die durch Reaktion von Carboxylgruppen enthaltenden Copolymeren mit Epoxidharzen erhalten werden. Derartige elektrophoretisch abscheidbare Doseninnenschutzlacke sind beispielsweise bekannt aus EP-A-6334 und EP-A-6336. Andere bekannte Doseninnenschutzlacke, die für die elektrophoretische Applikation geeignet sind, basieren auf Polymergemischen, die erhalten werden durch radikalische Copolymerisation von teilweise Carboxylgruppen enthaltenden ethylenisch ungesättigten Monomeren in Gegenwart eines Epoxidharzes und peroxidischer Initiatoren (siehe US 4,212,781, US 4,308,185, WO 88/1287).

Weitere elektrophoretisch abscheidbare Doseninnenschutzlacke sind beispielsweise beschrieben in DE-A-28 05 657, DE-A 36 01 560, US 4,476,263, EP-A-216 337.

Aus der US-PS 4,136,075 sind schließlich wäßrige Doseninnenlacke auf Acrylatharzbasis bekannt, die Wachse, z.B. Canaubawachs, als Additive enthalten können. Die Lacke werden nicht elektrophoretisch appliziert, sondern mittels Spritzlackierung, Tauchlackierung, Roll- oder Streichlackierung aufgebracht.

Bei der elektrophoretischen Abscheidung wird der abgeschiedene Naßfilm einem Spülvorgang unterzogen, der einen entscheidenden Einfluß auf die Qualität des getrockneten Films hat. Als Spülmedium wird entzogenes Ultrafiltrat, VE-Wasser oder ein VE-Wasser/Lösemittel/Amin-Gemisch verwendet. Bei den aus dem Stand der Technik bekannten Beschichtungsmitteln zur Doseninnenbeschichtung tritt häufig das Problem auf, daß die abgeschiedenen Filme bei dem sich an die elektrophoretische Abscheidung anschließenden Spülvorgang eine unzureichende Beständigkeit aufweisen, da der Naßfilm teilweise durch das Spülmedium angelöst werden kann. Die dadurch entstehenden dünneren Lackfilme oder im Extremfall die vollständige Freilegung des Substrats an einigen Stellen führen zu hohen Porigkeitswerten und damit zu einer mangelhaften Füllgutbeständigkeit. Diese auftretende Spülempfindlichkeit des elektrophoretisch abgeschiedenen Naßfilms ist von verschiedenen Faktoren abhängig, und zwar selbstverständlich von der Art des Beschichtungsmittels, von der Oberflächenspannung des Spülmediums, d.h. vom Gehalt an Lösemittel, Neutralisationsmittel und Lackresten, sowie von Applikationsparametern, d.h. zum Beispiel von der angelegten Spannung und der Beschichtungszeit bei der Abscheidung sowie von Turbulenzen während des Eintauchens in das Spülbecken.

Die der vorliegenden Erfindung zugrunde liegende Aufgabe bestand darin, ein Verfahren zur elektrophoretischen Innenbeschichtung von Metallbehältern, z.B. Dosen, zur Verfügung zu stellen, bei dem keine Spülempfindlichkeit des applizierten Naßfilms auftritt, d.h. bei dem der Naßfilm nicht angelöst wird, und bei dem infolgedessen ein ausgezeichnetes Porigkeitsverhalten und eine ausgezeichnete Füllgutbeständigkeit erreicht werden.

Das Verfahren sollte einfach durchführbar und universell anwendbar sein, d.h. es sollten die verschiedensten Beschichtungsmittel bei dem Verfahren einsetzbar sein. Weiterhin sollten keine weiteren Einschränkungen hinsichtlich von Verfahrensparametern bei der elektrophoretischen Abscheidung in Kauf genommen werden müssen.

Die der Erfindung zugrunde liegende Aufgabe wird durch das eingangs genannte Verfahren gelöst, das dadurch gekennzeichnet ist, daß die wäßrige abscheidbare Beschichtungszusammensetzung 0,01 bis 3 Gewichts-%, bezogen auf den Festkörper der Beschichtungszusammensetzung, im Bereich von 60°C bis 100°C in den schmelzflüssigen Zustand übergehendes Wachs enthält.

Als Wachse werden bevorzugt Naturwachse eingesetzt, und zwar pflanzliche Wachse, wie Carnaubawachs, Montanwachs, Candelillawachs, Japanwachs, Guarumawachs, Korkwachs, Reiskeimölwachs, Zuckerrohrwachs, tierische Wachse, wie z.B. Bienenwachs und Schellack-Wachs, sowie Mineralwachse, wie zum Beispiel Paraffin- und Mikrowachse, welche als sogenannte Petroleumwachse aus Erdöl gewonnen werden.

Anmeldungsgemäß können aber auch synthetische Wachse oder chemisch veränderte Wachstypen eingesetzt werden, sofern sie im Temperaturbereich von 60 °C bis 100 °C in den schmelzflüssigen Zustand übergehen. Beispiele für synthetische Wachse bzw. chemisch veränderte Wachse sind die nach dem Fischer-Tropsch-Verfahren durch Luftoxidation, selektive Lösemittel-Behandlung, Veresterung, Verseifung u.s.w. gewonnenen Paraffine, sowie Polyethylenwachse und das unter der Bezeichnung Castorwax bekannte hydrierte Rizinusöl.

In jedem Fall ist es wichtig, daß die Wachse in einem Anteil von 0,01 bis 3 Gewichts-%, bezogen auf den Festkörper des fertigen, abscheidbaren Beschichtungsmittels, also bezogen auf den Festkörper der fertigen Elektrotauchbadzusammenset-zung, eingesetzt werden.

Das Wachs kann direkt der organischen Harzstufe, d.h. der organischen Lösung des Bindemittels und ggf. Vernetzers zugegeben werden, wobei anschließend mit Ammoniak und/oder Amin neutralisiert und in Wasser dispergiert wird. Es ist aber auch möglich, eine Wachsdispersion in den fertigen, in Wasser dispergierten ET-Lack zuzugeben, wobei jedoch darauf zu achten ist, daß die Wachsdispersion mit dem wäßrigen Elektrophoreselack vordispergiert wird, da die Wachsdispersion andernfalls nicht fein genug verteilt werden kann und wieder aufschwimmen könnte. Besonders bevorzugt wird eine Wachsemulsion verwendet, welche dann direkt dem fertigen Elektrotauchlack zugegeben werden kann. Bei Verwendung von Wachsemulsionen ist es nicht nötig, die Wachsemulsion mit dem ET-Lack vorzudispergieren. Beispiele für geeignete Wachsemulsionen sind die Montanwachsemulsion Luba Print KL 30 der Firma L.P. Bader & Co. GmbH und die Canaubawachsemulsion Aquacer 510 der Firma Byk Cera.

Bevorzugt werden Naturwachse, und zwar besonders bevorzugt Carnaubawachs und/oder Montansäureesterwachse eingesetzt. Als Carnaubawachs wird beispielsweise die unter der Handelsbezeichnung Ceracol 181 erhältliche 30 %ige wäßrige Dispersion der Firma Byk Cera verwendet. Beispiele für weitere handelsübliche geeignete Wachse sind: Luba-print Wachsdispersionen der Firma L.P. Bader & Co. GmbH, z.B. mit der Bezeichnung LP KL 30 und LP 899/B, Aquacer 510 der Firma Byk Cera, Aquamat 206 der Firma Byk Cera, Polyslip EN 21 und Polyslip WG 40 der Firma Polychimie, Frankreich.

Gemäß der vorliegenden Anmeldung können die unterschiedlichsten elektrophoretisch abscheidbaren wäßrigen Beschichtungszusammensetzungen verwendet werden. Nachfolgend werden Beschichtungszusammensetzungen beschrieben, die sich besonders gut eignen für das erfindungsgemäße Verfahren, d.h. bei Verwendung dieser Beschichtungszusammensetzungen führt das erfindungsgemäße Verfahren zu besonders guten Ergebnissen hinsichtlich der Spülempfindlichkeit, der Porigkeit und letztendlich der Füllgutbeständigkeit. Bevorzugt werden die in WO 88/1287, DE-A-40 01 251 sowie in den US-PS 4,212,781 und US-PS 4,308,185 beschriebenen Beschichtungszusammensetzungen eingesetzt. Die in WO 88/1287 beschriebenen Dosenlacke enthalten eine Bindemittellösung, die
a) 30 bis 70 Gew.-% eines Bindemittels a mit einer Säurezahl von 20 bis 150 mg KOH/g
b) 2 bis 30 Gew.-%, bevorzugt 5 bis 16 Gew.-%, mindestens eines Phenoplast- und/oder eines Aminoplastharzes b,
c) 1 bis 7 Gew.-%, bevorzugt 2 bis 5 Gew.-% Ammoniak und/oder Amin als Neutralisationsmittel und
d) 20 bis 60 Gew.-% organische Lösemittel,
enthält, wobei die Summe der Gewichtsanteile der Komponenten a bis d jeweils 100 Gew.-% beträgt und wobei das Bindemittel a hergestellt worden ist, indem
I. bei Temperaturen von 80 bis 200°C, bevorzugt 120 °C bis 180 °C, unter Verwendung von Katalysatoren
   A) 20 bis 80 Gew.-% eines Epoxidharzes mit im Mittel mehr als einer Epoxidgruppe pro Molekül und einem zahlenmittleren Molekulargewicht von mindestens 500 mit
   B) 1 bis 60 Gew.-% eines carboxylgruppenhaltigen Polyesterharzes mit einem zahlenmittleren Molekulargewicht von 500 bis 5000 und einer Säurezahl von 30 bis 150 mg KOH/g so umgesetzt worden sind, daß mindestens 80 % der anfänglich vorhandenen Oxidanringe geöffnet worden sind, und
II in Gegenwart des im ersten Verfahrensschritt erhaltenen Reaktionsproduktes
   C) 10 bis 50 Gew.-% ethylenisch ungesättigte Monomere, wobei 10 bis 50 Gew.-% der Monomeren Carboxylgruppen enthalten,
bei Temperaturen von 100°C bis 160°C, bevorzugt 120 °C bis 140 °C, unter Verwendung von mindestens 2 Gew.-%, bezogen auf das Gewicht der ethylenisch ungesättigten Monomeren C, peroxidischer Initiatoren polymerisiert worden sind, wobei die Summe von A), B) und C) 100 Gew.-% beträgt.

Die aus der DE-A-40 01 251 bekannten und anmeldungsgemäß bevorzugt verwendeten Beschichtungszusammensetzungen basieren auf einer Bindemittellösung, die
a) 30 und 70 Gew.-% eines Bindemittels a mit einer Säurezahl von 20 bis 150 mg KOH/g,
b) 2 bis 30 Gew.-%, bevorzugt 5 bis 16 Gew.-%, mindestens eines Phenoplast- und/oder Aminoplastharzes und/oder eines Isocyanatvernetzers als Vernetzungsmittel b,
c) ggf. 1 bis 7 Gew.-%, ggf. bevorzugt 1 bis 5 Gew.-%, Ammoniak und/oder Amin als Neutralisationsmittel und
d) 5 bis 60 Gew.-% organische Lösemittel
enthält, wobei die Summe der Gewichtsanteile der Komponenten a bis d jeweils 100 Gew.-% beträgt und wobei das Bindemittel a hergestellt worden ist, indem
I. bei Temperaturen von 80 bis 200°C, vorzugsweise 120 bis 180°C, unter Verwendung von Katalysatoren
   A) 20 bis 80 Gew.-% eines Epoxidharzes mit im Mittel mehr als einer Epoxidgruppe pro Molekül und mit einem zahlenmittleren Molekulargewicht von mindestens 850 mit
   B) 1 bis 60 Gew.-% eines carboxylgruppenhaltigen Polyesterharzes mit einem zahlenmittleren Molekulargewicht von 500 bis 5000 und mit einer Säurezahl von 2 bis < 30 mg KOH/g
   so umgesetzt worden sind, daß mindesten 50 %, bevorzugt 50 bis < 80 % der anfänglich vorhandenen Oxiranringe geöffnet worden sind, und
II. in Gegenwart des im ersten Verfahrensschritt erhaltenen Reaktionsproduktes
   C) 10 bis 50 Gew.-% ethylenisch ungesättigte Monomere, wobei 10 bis 50 Gew.-% der Monomeren Carboxylgruppen enthalten,
   bei Temperaturen von 60 bis 200°C, bevorzugt 120 bis 140°C, unter Verwendung von mindestens 2 Gew.-%, bezogen auf das Gewicht der ethylenisch ungesättigten Monomeren C, peroxidischer Initiatoren polymerisiert worden sind, wobei die Summe der Gewichtsanteile der Komponenten A bis C jeweils 100 Gew.-% beträgt.

Die zum Teil aus der US-PS 4,212,781 bekannten und bevorzugt verwendeten wäßrigen Beschichtungszusammensetzungen basieren auf einer Bindemittel-lösung, die
a) 30 bis 70 Gew.-% eines Bindemittels a mit einer Säurezahl von 45 bis 150 mg KOH/g,
b) 2 bis 30 Gew.-, mindestens eines Phenoplast-und/oder Aminoplastharzes als Vernetzungsmittel b,
c) 1 bis 7 Gew.-% Ammoniak und/oder Amin als Neutralisationsmittel und
d) 5 bis 60 Gew.-% organische Lösemittel
enthält, wobei die Summe der Gewichtsanteile der Komponenten a bis d jeweils 100 Gew.-% beträgt und wobei das Bindemittel a hergestellt worden ist, indem in Gegenwart eines Epoxidharzes mit im Mittel mehr als einer Epoxidgruppe pro Molekül und einem zahlenmittleren Molekulargewicht von etwa 350 bis etwa 20.000 ethylenisch ungesättigte Monomere, wobei ein Teil der Monomeren Carboxylgruppen enthalten, bei Temperaturen von 60°C bis 200°C unter Verwendung von mindestens 2 Gew.-%, bezogen auf das Gewicht der ethylenisch ungesättigten Monomeren, peroxidischer Initiatoren polymerisiert worden sind.

Bevorzugt werden auch die in der US-PS 4,308,185 beschriebenen Beschichtungsmittel verwendet. Sie unterscheiden sich von den aus der US-PS 4,212,781 bekannten Lacke im wesentlichen dadurch, daß das verwendete Epoxidharz vor, während oder nach der radikalischen Copolymerisation mit mit Epoxidgruppen reaktionsfähigen Verbindungen derart umgesetzt worden ist, daß das erhaltene Bindemittel weitgehend frei von Epoxidgruppen ist.

Bezüglich näherer Einzelheiten der bevorzugt verwendeten Beschichtungsmittel wird auf die Ausführungen in WO 88/1287, DE-A-40 01 251, US 4,212,781 und US 4,308,185 verwiesen. Selbstverständlich sind anmeldungsgemäß aber auch andere, für die Doseninnenbeschichtung geeignete Beschichtungsmittel verwendbar.

Außer den Bindemittel lösungen und Wasser können die nach dem anmeldungsgemäßen Verfahren eingesetzten Beschichtungsmittel noch Pigmente, Füllstoffe sowie weitere Hilfs- und Zusatzstoffe in jeweils üblichen Mengen enthalten.

Pigmente und/oder Füllstoffe werden bevorzugt in Mengen von 25 bis 35 Gew.-%, bezogen auf das Gesamtgewicht der Beschichtungsmasse, eingesetzt. Beispiele für Pigmente ist Titandioxid, beispielsweise die unter den Handelsnamen Titan Rutil RN 59, RCT 60, R 900 und RDI-S erhältlichen Produkte.

Als Füllstoffe sind Bariumsulfat, Siliciumdioxid, Kaliumcarbonat auch Talkum beispielhaft zu nennen.

Bevorzugt enthalten die Beschichtungsmassen noch 0,01 bis 5,0 Gew.-%, bezogen auf das Gesamtgewicht der Beschichtungszusammensetzung, weitere Hilfs- und Zusatzstoffe, wie z.B. Weichmacher, Stabilisatoren, Netzmittel, Dispergierhilfsmittel, Katalysatoren und oberflächenaktive Zusatzmittel.

Der Badfestkörper der elektrophoretisch abscheidbaren Beschichtungsmittel liegt im Bereich von 5 bis 30 Gew.-%, vorzugsweise im Bereich von 8 bis 20 Gew.-%.

Gemäß dem beanspruchten Verfahren werden die wäßrigen Beschichtungsmittel bevorzugt durch die anodische Elektrotauchlackierung aufgebracht.
Die anodische Elektrotauchlackierung erfolgt in einem offenen Tauchbad, das ständig gerührt und umgepumpt wird, um ein Absetzen der dispergierten Harzteilchen und der Pigmente zu vermeiden. Die Beschichtung erfolgt mit Gleichstrom im Bereich von 20 bis 500 Volt, wobei der zu beschichtende Metallbehälter als Anode geschaltet wird. Die Beschichtungszeit liegt zwischen 1 Sekunde und 3 Minuten. Nach der Spülung mit Wasser und ggf. Ultrafiltrat wird der Naßfilm bei Temperaturen von 150°C bis 250°C bei einer Einbrennzeit von 1 Sekunde bis zu 30 Minuten gehärtet.
Bevorzugt werden Getränke- und Nahrungsmitteldosen kurz bei hohen Temperaturen eingebrannt (1 Sekunde bis 250 Sekunden bei Temperaturen von 200 bis 230°C). Nach dem Einbrennen liegt die Schichtdicke der Doseninnenbeschichtung im allgemeinen im Bereich von 3 µm bis 15 µm, vorzugsweise im Bereich von 4 µm bis 8 µm.

Es ist darüber hinaus aber auch möglich, die wäßrigen Beschichtungsmittel gemäß dem beanspruchten Verfahren mit Hilfe der kathodischen Elektrotauchlackierung aufzubringen.

Die zu beschichtenden Metallbehälter können aus den unterschiedlichsten Materialien bestehen und die unterschiedlichsten Geometrien aufweisen. Als Materialien kommen insbesondere Aluminium, Schwarzblech, Weißblech und verschiedene Eisenlegierungen in Frage, die ggf. mit einer Passivierungsschicht auf Basis von Nickel-, Chrom- und Zinkverbindungen versehen sind. Die Emballagen können in Form von Dosenhalbteilen, also Rümpfen und Deckeln, als 3-teilige Dosen und als 2-teilige, abgestreckt-tiefgezogene oder anderweitig tiefgezogene Getränke- und Nahrungsmitteldosen beschichtet werden.

Nach dem erfindungsgemäßen Verfahren werden Filme erhalten, die keine Poren mehr enthalten. Dies ist darauf zurückzuführen, daß durch die Verwendung von Wachs mit einem Schmelzbereich von 60°C bis 100°C in den genannten Mengenverhältnissen der Naßfilm unempfindlich gegenüber Anlösung bei der Spülung nach der ETL-Abscheidung geworden ist. Die Porigkeit kann dadurch bestimmt werden, daß die Prüfdose mit einem Elektrolyten gefüllt und durch Anlegen einer festgelegten Prüfspannung festgestellt wird, ob die Isolierwirkung des Films über einen Zeitraum von 4 Sekunden ausreichend ist. Im einzelnen sollte bei einer Spannung von 6,3 Volt in einer 1 Gew.-%igen NaCl-Lösung für die Stromstärke ein Grenzwert von höchstens 1,0 mA erreicht werden. Nach dem erfindungsgemäßen Verfahren werden diese Grenzwerte erreicht, während ohne Wachs zugabe die Werte für die Porigkeit wesentlich höher liegen.

Ein weiterer Vorteil, der durch das erfindungsgemäße Verfahren erzielt wird, besteht darin, daß die Zugabe von Wachs das Schaumverhalten bei der Befüllung der Metallbehälter mit kohlensäurehaltigem Füllgut positiv beeinflußt, d.h. das Füllgut schäumt nicht mehr so stark.

Nachfolgend wird die Erfindung an Hand von Ausführungsbeispielen näher erläutert:

### Beispiel 1:

In einem Vierhalskolben, der mit Rührer, Thermometer und Rückflußkühler ausgerüstet ist, werden 1200 g des Glycidylesters der Versaticsäure, 900 g 2-Butanon, 900 g Trimellitsäureanhydrid und 5 g N,N-Dimethylbenzylamin auf 90°C erwärmt. Wenn die Viskosität (gemessen bei 23°C) auf 1,5 Pa.s gestiegen ist, wird der Ansatz abgekühlt und ausgetragen.

In einem Vierhalskolben, der mit Rührer, Thermometer und Destillationsaufsatz ausgerüstet ist, wird eine Lösung von 1050 g eines Epoxidharzes auf Basis Bisphenol A mit einem Epoxy-Äquivalentgewicht von 3400 in 1000 g Butylglykol und 440 g Propylenglykolmonophenyl-ether auf 140°C erhitzt. Nach Zugabe von 2 g N,N-Dimethylbenzylamin läßt man 950 g der wie zuvor beschrieben hergestellten Polyesterpolycarbonsäure zulaufen und destilliert gleichzeitig das Lösungsmittel (2-Butanon) ab. Der Ansatz wird noch 3 Stunden bei 160°C gehalten. Die Säurezahl liegt dann bei 37 mg KOH/g und die Viskosität (einer 30 %igen Lösung in Butylglykol bei 23°C) bei 380 mPa.s.

In einem Vierhalskolben mit Rührer, Thermometer, Rückflußkühler und zwei Zulaufbehältern werden 2100 g des hergestellten Epoxiesters und 300 g Butylglykol vorgelegt. Dazu gibt man bei 140°C gleichzeitig aus dem ersten Zulaufbehälter eine Mischung aus 130 g Acrylsäure, 160 g Styrol und 200 g Butylacrylat und aus dem zweiten Zulaufbehälter eine Lösung von 30 g tert. Butylperbenzoat in 40 g Butylglykol. Die Monomeren werden während 2 h, der Initiator während 3 h zudosiert. Danach wird noch 4 Stunden auf 140°C gehalten. Nach Beendigung der Polymerisation werden 190 g eines hochmethylolierten Bisphenol A-Formaldehydharzes bei 90°C 4 Stunden mit dem Ansatz präkondensiert. Es resultiert eine 56%ige Bindemittel-Lösung.

Die erhaltene Bindemittel-Vernetzer-Lösung wird mit 60 %iger wäßriger Dimethylethanolamin-Lösung unter kräftigem Rühren neutralisiert.

1800 g des erhaltenen Ansatzes werden mit 40 g Dimethylethanolamin und 7160 g VE-Wasser unter starkem Rühren versetzt. Es wird eine 12 %ige Dispersion erhalten.

4500 g der Dispersion werden mit 36 g 30 %iger Carnaubawachsemulsion (Handelsname Aquacer 510 der Fa. Cera Chemie bV) versetzt. Es wird die Dispersion A erhalten. Die Dispersion ohne Zugabe von Carnaubawachsemulsion wird im folgenden als Dispersion B bezeichnet.

Mit den beiden Dispersionen A und B werden Getränkedosen innen ET-lackiert, mit VE-Wasser und Ultrafiltrat gewaschen und im Umluftofen 3 Minuten bei 240°C getrocknet. Das Trockenlackgewicht der so innenlackierten Getränkedosen beträgt 250 mg.

Bei der nachfolgenden Porigkeitsprüfung wurden folgende Meßergebnisse erhalten:

| Elektrotauchlack | Porigkeit mit 1 %iger Natriumchloridlösung |
|---|---|
| A | 0,9 mA |
| B | 5,0 mA |

### Beispiel 2:

18,14 Teile des Epoxidharzes Epikote 1007® (Shell) und 18,14 Teile des Epoxidharzes Epikote 1009® (Shell) werden bei 130°C in 26,63 Teilen Butylglykol und 19,2 Teilen Hexylglykol gelöst. Dann wird eine Monomerenmischung aus 6,62 Teilen Methacrylsäure, 4,18 Teilen Styrol, 4,55 Teilen Ethylacrylat während 2 h und eine Mischung aus 0,35 Teilen t-Butylperbenzoat, 2,17 Teilen Butylglykol während 2,5 h zugegeben und 4 h bei 130°C gehalten.
a) Zu 3077,2 g der zuvor beschriebenen Epoxid-Acrylat-Zusammensetzung werden 179,2 g des Phenolharzvernetzungsmittels Uravar FB 209 (DSM Resins) und 17,0 g Carnaubawachs (100 %ig) zugegeben und bei 90°C 2 Stunden gehalten. Dann werden 143,6 g Triethylamin während 15 Minuten sowie 13702,0 g destilliertes Wasser zugegeben. Es wird eine 10 %ige Dispersion erhalten.
b) Zu 3077,2 g der oben beschriebenen Epoxid-Acrylat-Zusammensetzung werden 179,2 g des Phenolharz-Vernetzungsmittels Uravar FB 209 (DSM) gegeben und bei 90 °C 2 Stunden gehalten. Dann werden 143,6 g Triethylamin während 15 Minuten sowie 13607,0 g destilliertes Wasser zugegeben. Anschließend werden in 4500 g der erhaltenen Dispersion 7,5 g der Wachsemulsion Aquacer 510 der Firma Byk Cera (30 %ig) eingerührt.
c) 11,3 g der Carnaubawachssuspension Ceracol 181 (30 %ig) werden vorgelegt. Diese Vorlage wird mit einem Teil der gemäß 2 b) hergestellten Dispersion (4500 g) vordispergiert. Dann wird die vordispergierte Wachssuspension in den Rest der gemäß 2 b) hergestellten Dispersion eingerührt.
d) Es wird wie unter b) verfahren mit dem Unterschied, daß an Stelle der Carnaubawachs-Emulsion 15 g der Montansäureesteremulsion mit der Handelsbezeichnung Luba Print KL 30 (Firma L.P. Bader & Co. GmbH, 30 %ig) eingesetzt wird.

Eine nichtlackierte Stahlgetränkedose wird anodisch geschaltet und in die Dispersionen obiger Zusammensetzung (Beispiele 2 a bis 2 d) sowie in eine Dispersion gemäß 2 a) ohne Carnaubawachs (Vergleichsbeispiel 2) getaucht. Mittels kathodisch geschalteter Elektrode, welche sich in der Dose befindet, und/oder diverser Hilfselektroden außerhalb der Dose wird elektrophoretisch appliziert (U = 10 - 400 V, t = 0,1 - 120 sec, T = 10 - 40°C). Nach der Trocknung des mit Ultrafiltrat oder VE-Wasser oder ähnlicher Spülmedien gewaschenen Naßfilms bei 170 - 240°C / 0,5 - 5 Min. werden Lackfilme mit nachfolgenden Prüfergebnissen erhalten.

| Test | Bsp. 2a | Bsp.2b | Bsp.2c | Bsp. 2d | Vergleichsbeispiel 2 |
|---|---|---|---|---|---|
| Haftung *) Porigkeit (1 %ige NaCl-Lsg. 6,3 V; 4 sec) | GTO | GTO | GTO | GTO | GTO |
| [mA] | 0,5 | 0,3 | 0,6 | 0,3 | 5 |

| | | | | | |
|---|---|---|---|---|---|
| *): Der Haftungstest wird nach Pasteuration der Dosen durchgeführt, d.h. die Dosen werden mit Leitungswasser gefüllt und bei 100°C 30 Minuten gehalten. Dann wird der Gitterschnitt-Test bei den innenbeschichteten Dosen duchgeführt (Notenskala GT O bis GT 5). | | | | | |

### Beispiel 3

7,5 Teile Epikote 1007® (Shell) und 7,5 Teile Epikote 1009® (Shell) werden in 10,7 Teilen Butylglykol und 8,0 Teilen Hexylglykol aufgelöst (bei 140°C). In einen Monomerentank werden 2,8 Teile Methacrylsäure, 1,7 Teile Styrol und 1,9 Teile Ethylacrylat eingewogen und vorgemischt. In den Initiatortank werden 0,9 Teile Butylglykol und 0,15 Teile t-Butylperbenzoat eingewogen und vorgemischt. Bei 140°C werden der Inhalt des Monomerentanks während 2 h und der Inhalt des Initiatortanks während 2,5 h gleichmäßig in den Reaktor gegeben. Nach Beendigung des Initiatorzulaufs wird noch 4 h bei 140°C nachpolymerisiert. Es wird auf 90°C abgekühlt, und dann 2,4 Teile des Phenolharzvernetzers Uravar L9 (DSM) zugegeben. Anschließend wird noch 2 h bei 90°c gehalten. Dann werden 1,94 Teile Triethylamin (wasserfrei) innerhalb von 15 Minuten unter starkem Rühren zugegeben. Anschließend werden etwa 53 Teile destilliertes Wasser unter starkem Rühren zugegeben.

52,2 Teile der erhaltenen Dispersion werden mit 47,8 Teilen VE-Wasser verdünnt. Es wird die Dispersion A erhalten.

Die Hälfte der Dispersion A wird mit 0,4 Teilen der Wachsemulsion Aquacer (30 %ig) versetzt. Es wird die Dispersion B erhalten.

Es werden Stahlgetränkedosen mit den Dispersionen A und B innenlackiert. Die innenlackierten Dosen werden bis 1 cm unter den Rand mit einer Prüflösung aus 10 % CuSO₄, 10 % HCl (37 %ig), 80 % Leitungswasser) gefüllt, verschlossen und 24 h bei RT gelagert. Nach Öffnen der Dosen wird gespült und das Substrat auf Perforation und Korrosionsansätze untersucht. Mit diesem Test wird die durch möglicherweise aufschwimmendes Wachs kaschierte Porigkeit sichtbar gemacht.

| | Bsp. mit Disp. A | Bsp. mit Disp. B |
|---|---|---|
| Beurteilung : | teilweise Perforation und Korrosion im Bodenbereich; Rumpf und Neck haben etwas Unterfilmkorrosion | keine Perforation einige Korrosionsansätze im Bodenbereich; Rumpf und Neck i.o. |

## Patentansprüche

1. Verfahren zur elektrophoretischen Innenbeschichtung von Metallbehältern zur Aufbewahrung von Lebensmitteln und Getränken unter Verwendung einer wäßrigen Beschichtungszusammensetzung, dadurch gekennzeichnet, daß die abscheidbare Beschichtungszusammensetzung 0,01 bis 3 Gewichts-%, bezogen auf den Festkörper der Beschichtungszusammensetzung, im Bereich von 60 °C bis 100 °C in den schmelzflüssigen Zustand übergehendes Wachs enthält.

2. Verfahren nach Anspruch 1, dadurch gekennzeichnet, daß als Wachse Naturwachse eingesetzt werden.

3. Verfahren nach Anspruch 2, dadurch gekennzeichnet, daß als Naturwachse Carnaubawachs und/oder Montanwachs eingesetzt werden.

4. Verfahren nach Anspruch 1 bis 3, dadurch gekennzeichnet, daß das Wachs in Form einer Emulsion dem Elektrophoreselack zugegeben wird.

5. Verfahren nach Anspruch 1 bis 4, dadurch gekennzeichnet, daß die Beschichtungszusammensetzung eine Bindemittellösung enthält, die
a) 30 bis 70 Gewichts-% eines Bindemittels a mit einer Säurezahl von 20 bis 150 mg KOH/g
b) 2 bis 30 Gewichts-%, bevorzugt 5 bis 16 Gewichts-%, mindestens eines Phenoplast-und/oder eines Aminoplastharzes b,
c) 1 bis 7 Gew.-%, bevorzugt 2 bis 5 Gew.-%, Ammoniak und/oder Amin als Neutralisationsmittel und
d) 20 bis 60 Gew.-% organische Lösemittel,
enthält, wobei die Summe der Gewichtsanteile der Komponenten a bis d jeweils 100 Gew.-% beträgt und wobei das Bindemittel a hergestellt worden ist, indem
I. bei Temperaturen von 80 bis 200°C, bevorzugt 120 °C bis 180 °C, unter Verwendung von Katalysatoren
A) 20 bis 80 Gew.-% eines Epoxidharzes mit im Mittel mehr als einer Epoxidgruppe pro Molekül und einem zahlenmittleren Molekulargewicht von mindestens 500 mit
B) 1 bis 60 Gew.-% eines carboxylgruppenhaltigen Polyesterharzes mit einem zahlenmittleren Molekulargewicht von 500 bis 5000 und einer Säurezahl von 30 bis 150 mg KOH/g
so umgesetzt worden sind, daß mindestens 80 % der anfänglich vorhandenen Oxiranringe geöffnet worden sind, und
II in Gegenwart des im ersten Verfahrensschritt erhaltenen Reaktionsproduktes
C) 10 bis 50 Gew.-% ethylenisch ungesättigte Monomere, wobei 10 bis 50 Gew.-% der Monomeren Carboxylgruppen enthalten,
bei Temperaturen von 100°C bis 160°C, bevorzugt 120 °C bis 140 °C, unter Verwendung von mindestens 2 Gew.-%, bezogen auf das Gewicht der ethylenisch ungesättigten Monomeren C, peroxidischer Initiatoren polymerisiert worden sind, wobei die Summe von A), B) und C) 100 Gew.-% beträgt.

6. Verfahren nach Anspruch 1 bis 4, dadurch gekennzeichnet, daß die Beschichtungszusammensetzung eine Bindemittel lösung enthält, die
a) 30 bis 70 Gew.-% eines Bindemittels a mit einer Säurezahl von 20 bis 150 mg KOH/g
b) 2 bis 30 Gew.-%, bevorzugt 5 bis 16 Gew.-%, mindestens eines Phenoplast- und/oder eines Aminoplastharzes und/oder eines Isocyanatvernetzers als Vernetzungsmittel b,
c) ggf. 1 bis 7 Gew.-%, ggf. bevorzugt 1 bis 5 Gew.-%, Ammoniak und/oder Amin als Neutralisationsmittel und
d) 5 bis 60 Gew.-% organische Lösemittel,
enthält, wobei die Summe der Gewichtsanteile der Komponenten a bis d jeweils 100 Gew.-% beträgt und wobei das Bindemittel a hergestellt worden ist, indem
I. bei Temperaturen vo 80 bis 200°C, vorzugsweise 120 °C bis 180 °C, unter Verwendung von Katalysatoren
A) 20 bis 80 Gew.-% eines Epoxidharzes mit im Mittel mehr als einer Epoxidgruppe pro Molekül und mit einem zahlenmittleren Molekulargewicht von mindestens 850 mit
B) 1 bis 60 Gew.-% eines carboxylgruppenhaltigen Polyesterharzes mit einem zahlenmittleren Molekulargewicht von 500 bis 5000 und mit einer Säurezahl von 2 bis < 30 mg KOH/g
so umgesetzt worden sind, daß mindestens 50 %, bevorzugt 50 bis < 80 % der anfänglich vorhandenen Oxiranringe geöffnet worden sind, und
II in Gegenwart des im ersten Verfahrensschritt erhaltene Reaktionsproduktes
C) 10 bis 50 Gew.-% ethylenisch ungesättigte Monomere, wobei 10 bis 50 Gew.-% der Monomeren Carboxylgruppen enthalten,
bei Temperaturen von 60°C bis 200°C, bevorzugt 120 bis 140°C, unter Verwendung von mindestens 2 Gew.-%, bezogen auf das Gewicht der ethylenisch ungesättigten Monomeren C, peroxidischer Initiatoren polymerisiert worden sind, wobei die Summe der Gewichtsanteile der Komponenten A bis C jeweils 100 Gew.-% beträgt.

7. Verfahren nach Anspruch 1 bis 4, dadurch gekennzeichnet, daß die Beschichtungszusammensetzung eine Bindemittellösung enthält, die
a) 30 bis 70 Gew.-% eines Bindemittels a mit einer Säurezahl von 45 bis 150 mg KOH/g,
b) 2 bis 30 Gew.-% mindestens eines Phenoplast- und/oder eines Aminoplastharzes als Vernetzungsmittel b,
c) 1 bis 7 Gew.-% Ammoniak und/oder Amin als Neutralisationsmittel und
d) 5 bis 60 Gew.-% organische Lösungsmittel
enthält, wobei die Summe der Gewichtsanteile der Komponenten a bis d jeweils 100 Gew.-% beträgt und wobei das Bindemittel a hergestellt worden ist, indem in Gegenwart eines Epoxidharzes mit im Mittel mehr als einer Epoxidgruppe pro Molekül und einem zahlenmittleren Molekulargewicht von etwa 350 bis etwa 20 000 ethylenisch ungesättigte Monomere, wobei ein Teil der Monomeren Carboxylgruppen enthalten, bei Temperaturen von 60°C bis 200°C unter Verwendung von mindestens 2 Gew.-%, bezogen auf das Gewicht der ethylenisch ungesättigten Monomeren, peroxidischer Initiatoren polymerisiert worden sind.

8. Verfahren nach Anspruch 7, dadurch gekennzeichnet, daß das Epoxidharz vor, während oder nach der radikalischen Polymerisation mit Epoxidgruppen reaktionsfähigen Verbindungen derart umgesetzt worden ist, daß das Bindemittel a weitgehend frei von Epoxidgruppen ist.

9. Verfahren nach Anspruch 1 bis 8, dadurch gekennzeichnet, daß die Metallbehälter 3-teilige und 2-teilige Dosen, abgestreckt-tiefgezogene oder anderweitig tiefgezogene Dosen sind.

10. Verfahren nach Anspruch 1 bis 8, dadurch gekennzeichnet, daß die Metallbehälter in Form von Dosenrümpfen und Dosendeckeln vorliegen.

## Claims

1. Process for the electrophoretic internal coating of metal containers for the storage of foodstuffs and beverages, using an aqueous coating composition, characterized in that the depositable coating composition contains 0.01 to 3% by weight, relative to the solids content of the coating composition, of wax changing into the molten state in the range from 60°C to 100°C.

2. Process according to Claim 1, characterized in that natural waxes are used as the waxes.

3. Process according to Claim 2, characterized in that carnauba wax and/or montan wax are used as the natural waxes.

4. Process according to Claims 1 to 3, characterized in that the wax is added in the form of an emulsion to the electrophoretic coating.

5. Process according to Claims 1 to 4, characterized in that the coating composition contains a binder solution which comprises
a) 30 to 70% by weight of a binder a having an acid number from 20 to 150 mg of KOH/g,
b) 2 to 30% by weight, preferably 5 to 16% by weight, of at least one phenoplast resin and/or aminoplast resin b,
c) 1 to 7% by weight, preferably 2 to 5% by weight, of ammonia and/or an amine as a neutralizing agent and
d) 20 to 60% by weight of organic solvents,
the total of the proportions by weight of the components a to d always being 100% by weight, and the binder a having been prepared by
I. A) 20 to 80% by weight of an epoxide resin having on average more than one epoxide group per molecule and a number-average molecular weight of at least 500 having been reacted, at temperatures from 80 to 200°C, preferably 120°C to 180°C, with the use of catalysts, with
B) 1 to 60% by weight of a polyester resin containing carboxyl groups and having a number-average molecular weight from 500 to 5,000 and an acid number from 30 to 150 mg of KOH/g,
in such a way that at least 80% of the oxirane rings initially present have been opened, and
II C) 10 to 50% by weight of ethylenically unsaturated monomers, 10 to 50% by weight of the monomers containing carboxyl groups,
having been polymerized, in the presence of the reaction product obtained in the first process step, at temperatures from 100°C to 160°C, preferably 120°C to 140°C, using at least 2% by weight, relative to the weight of the ethylenically unsaturated monomers C, of peroxide initiators, the total of A), B) and C) being 100% by weight.

6. Process according to Claims 1 to 4, characterized in that the coating composition contains a binder solution which comprises
a) 30 to 70% by weight of a binder a having an acid number from 20 to 150 mg of KOH/g,
b) 2 to 30% by weight, preferably 5 to 16% by weight, of at least one phenoplast resin and/or aminoplast resin and/or an isocyanate crosslinking agent as crosslinking agent b,
c) if appropriate 1 to 7% by weight, if appropriate preferably 1 to 5% by weight, of ammonia and/or an amine as neutralizing agent and
d) 5 to 60% by weight of organic solvents, the total of the proportions by weight of the components a to d always being 100% by weight, and the binder a having been prepared by
I. A) 20 to 80% by weight of an epoxide resin having on average more than one epoxide group per molecule and a number-average molecular weight of at least 850
having been reacted, at temperatures from 80 to 200°C, preferably 120°C to 180°C, with the use of catalysts, with
B) 1 to 60% by weight of a polyester resin containing carboxyl groups and having a number-average molecular weight from 500 to 5,000 and an acid number from 2 to < 30 mg of KOH/g,
in such a way that at least 50%, preferably 50 to < 80%, of the oxirane rings initially present have been opened, and
II C) 10 to 50% by weight of ethylenically unsaturated monomers, 10 to 50% by weight of the monomers containing carboxyl groups,
having been polymerized, in the presence of the reaction product obtained in the first process step, at temperatures from 60°C to 200°C, preferably 120 to 140°C, using at least 2% by weight, relative to the weight of the ethylenically unsaturated monomers C, of peroxide initiators, the total of the proportions by weight of the components A to C always being 100% by weight.

7. Process according to Claims 1 to 4, characterized in that the coating composition contains a binder solution which comprises
a) 30 to 70% by weight of a binder a having an acid number from 45 to 150 mg of KOH/g,
b) 2 to 30% by weight of at least one phenoplast resin and/or aminoplast resin as crosslinking agent b,
c) 1 to 7% by weight of ammonia and/or an amine as neutralizing agent and
d) 5 to 60% by weight of organic solvents, the total of the proportions by weight of the components a to d always being 100% by weight, and the binder a having been prepared by ethylenically unsaturated monomers, a part of the monomers containing carboxyl groups, having been polymerized, in the presence of an epoxide resin having on average more than one epoxide group per molecule and a number-average molecular weight from about 350 to about 20,000, at temperatures from 60°C to 200°C, using at least 2% by weight, relative to the weight of the ethylenically unsaturated monomers, of peroxide initiators.

8. Process according to Claim 7, characterized in that the epoxide resin has been reacted, before, during or after the free-radical polymerization, with compounds reactive with epoxide groups in such a way that the binder a is largely free of epoxide groups.

9. Process according to Claims 1 to 8, characterized in that the metal containers are 3-part and 2-part cans, drawn-and-ironed or otherwise deep-drawn cans.

10. Process according to Claims 1 to 8, characterized in that the metal containers are in the form of can trunks and can lids.

## Revendications

1. Procédé de revêtement interne électrophorétique de récipients métalliques en vue de la conservation de produits alimentaires et de boissons par l'utilisation d'une composition aqueuse de revêtement, caractérisé en ce que la composition de revêtement susceptible d'être déposée contient de 0,01 à 3 % en poids, par rapport à la teneur en matières solides de la composition de revêtement, de cire passant à l'état fondu dans le domaine de 60°C à 100°C.

2. Procédé selon la revendication 1, caractérisé en ce que l'on utilise, en tant que cires, des cires naturelles.

3. Procédé selon la revendication 2, caractérisé en ce que l'on utilise en tant que cires naturelles de la cire de carnauba et/ou de la cire montan.

4. Procédé selon la revendication 1 à 3, caractérisé en ce que l'on ajoute la cire sous la forme d'une émulsion à la laque d'électrophorèse.

5. Procédé selon la revendication 1 à 4, caractérisé en ce que la composition de revêtement contient une solution de liant qui contient
a) de 30 à 70 % en poids d'un liant a ayant un indice d'acidité de 20 à 150 mg de KOH/g,
b) de 2 à 30 % en poids, de préférence de 5 à 16 % en poids, d'au moins une résine phénoplaste et/ou d'une résine aminoplaste b,
c) de 1 à 7 % en poids, de préférence de 2 à 5 % en poids d'ammoniac et/ou d'amine en tant qu'agent de neutralisation, et
d) de 20 à 60 % en poids de solvants organiques, la somme des proportions en poids des composants a à d étant à chaque fois de 100 % en poids et le liant a ayant été préparé en ce que l'on a fait réagir,
I. à des températures de 80 à 200°C, de préférence de 120°C à 180°C, sous utilisation de catalyseurs,
A) de 20 à 80 % en poids d'une résine époxyde ayant en moyenne plus d'un groupement époxyde par molécule et un poids moléculaire moyen au nombre d'au moins 500 avec
B) de 1 à 60 % en poids d'une résine de polyester contenant des groupements carboxyles ayant un poids moléculaire moyen au nombre de 500 à 5 000 et un indice d'acidité de 30 à 150 mg de KOH/g,
de sorte qu'au moins 80 % des cycles oxirane présents initialement ont été ouverts, et
II en ce que l'on a polymérisé, en présence du produit de réaction obtenu dans la première étape de procédé
C) de 10 à 50 % en poids de monomères éthyléniquement insaturés, de 10 à 50 % en poids des monomères contenant des groupements carboxyles, à des températures de 100°C à 160°C, de préférence de 120°C à 140°C, sous utilisation d'au moins 2 % en poids, par rapport au poids des monomères éthyléniquement insaturés C, d'agents initiateurs peroxydiques, la somme de A), de B) et de C) étant de 100 % en poids.

6. Procédé selon la revendication 1 à 4, caractérisé en ce que la composition de revêtement contient une solution de liant qui contient
a) de 30 à 70 % en poids d'un liant a ayant un indice d'acidité de 20 à 150 mg de KOH/g,
b) de 2 à 30 % en poids, de préférence de 5 à 16 % en poids d'au moins une résine phénoplaste et/ou d'une résine aminoplaste et/ou d'un agent de réticulation d'isocyanate en tant qu'agent de réticulation b,
c) le cas échéant de 1 à 7 % en poids, le cas échéant, de préférence de 1 à 5 % en poids d'ammoniac et/ou d'amine en tant qu'agent de neutralisation et
d) de 5 à 60 % en poids de solvants organiques, la somme des proportions en poids des composants a à d étant à chaque fois de 100 % en poids et le liant a ayant été préparé en ce que l'on a fait réagir,
I. à des températures de 80 à 200°C, de préférence de 120°C à 180°C, sous utilisation de catalyseurs,
A) de 20 à 80 % en poids d'une résine époxyde ayant en moyenne plus d'un groupement époxyde par molécule et un poids moléculaire moyen au nombre d'au moins 850 avec
B) de 1 à 60 % en poids d'une résine de polyester contenant des groupements carboxyles ayant un poids moléculaire moyen au nombre de 500 à 5 000 et un indice d'acidité de 2 à < 30 mg de KOH/g,
de sorte qu'au moins 50 %, de préférence de 50 à < 80 % des cycles oxirane présents initialement ont été ouverts, et
II en ce que l'on polymérise, en présence du produit de réaction obtenu dans la première étape de procédé,
C) de 10 à 50 % en poids de monomères éthyléniquement insaturés, de 10 à 50 % en poids des monomères contenant des groupements carboxyles,
à des températures de 60°C à 200°C, de préférence de 120°C à 140°C, sous utilisation d'au moins 2 % en poids, par rapport au poids des monomères éthyléniquement insaturés C, d'agents initiateurs peroxydiques, la somme des proportions de A), de B) et de C) étant de 100 % en poids.

7. Procédé selon la revendication 1 à 4, caractérisé en ce que la composition de revêtement contient une solution de liant qui contient
a) de 30 à 70 % en poids d'un liant a ayant un indice d'acidité de 45 à 150 mg de KOH/g,
b) de 2 à 30 % en poids d'au moins une résine phénoplaste et/ou d'une résine aminoplaste en tant qu'agent de réticulation b,
c) de 1 à 7 % en poids d'ammoniac et/ou d'amine en tant qu'agent de neutralisation, et
d) de 5 à 60 % en poids de solvants organiques,
la somme des proportions en poids des composants a à d étant à chaque fois de 100 % en poids et le liant a ayant été préparé en ce que l'on a polymérisé, en présence d'une résine époxyde ayant en moyenne plus d'un groupement époxyde par molécule et un poids moléculaire moyen au nombre d'environ 350 à environ 20 000, des monomères éthyléniquement insaturés, une partie des monomères contenant des groupements carboxyles, à des températures de 60°C à 200°C sous utilisation d'au moins 2 % en poids, par rapport au poids des monomères éthyléniquement insaturés, d'agents initiateurs peroxydiques.

8. Procédé selon la revendication 7, caractérisé en ce que l'on a fait réagir la résine époxyde, avant, pendant ou après la polymérisation radicalaire avec des composés capables de réaction avec les groupement époxydes, de manière à ce que le liant a soit exempt dans une large mesure de groupements époxydes.

9. Procédé selon la revendication 1 à 8, caractérisé en ce que les récipients métalliques sont des boîtes à 3 ou à 2 parties, des boîtes obtenues par étirage/emboutissage profond ou obtenues par un emboutissage quelconque.

10. Procédé selon la revendication 1 à 8, caractérisé en ce que les récipients métalliques sont présents sous la forme de fonds et de couvercles de boîtes.
